(19) Europäisches Patentamt
European Patent Office
Office européen des brevets

(11) EP 1 087 341 B1

(12) **EUROPEAN PATENT SPECIFICATION**

(45) Date of publication and mention
of the grant of the patent:
**09.11.2005 Bulletin 2005/45**

(51) Int Cl.$^7$: **G06T 11/00**, G06T 11/20

(21) Application number: **00120593.9**

(22) Date of filing: **20.09.2000**

(54) **Method and apparatus for rendering sub-pixel anti-aliased graphics**

Verfahren und Gerät zur Grafikdarstellung mit Subpixel-Antialiasing

Méthode et appareil pour représenter des graphiques anticreneles avec sub-pixels

(84) Designated Contracting States:
**AT BE CH CY DE DK ES FI FR GB GR IE IT LI LU MC NL PT SE**

(30) Priority: **21.09.1999 US 400153**

(43) Date of publication of application:
**28.03.2001 Bulletin 2001/13**

(73) Proprietor: **Monotype Imaging, Inc.
Woburn, Massachusetts 01801 (US)**

(72) Inventor: **Paul, Steven William
Belchertown, MA 01007-9311 (US)**

(74) Representative: **Gallafent, Richard John et al
GALLAFENT & CO.
27 Britton Street,
London EC1M 5UD (GB)**

(56) References cited:
**EP-A- 0 346 621        EP-A- 0 435 391
US-A- 5 543 819**

- **ANONYMOUS: "Copy Operation for Color Antialiasing" IBM TECHNICAL DISCLOSURE BULLETIN, vol. 27, no. 10B, 1 March 1985 (1985-03-01), pages 6234-6236, XP002218249 New York, US**

**Description**

FIELD OF THE INVENTION

The invention relates generally to a method and apparatus of sub-pixel rendering of graphic objects, and more particularly, to a method and apparatus for sub-pixel anti-aliased display of typefaces or lines on stripe topology colour displays.

BACKGROUND OF THE INVENTION

Originally, a 'bitmap' was a rectangular array of 'bits' (0's or 1's) which mapped to an array of 'pixels' (short for picture elements) on a display device, turning the pixel ON or OFF. The term 'pixel' is used to mean both the area of the display and the data mapped to it.

Later, when display devices became capable of displaying more than 2 values, the concepts of pixel and bitmap were extended to provide multiple values. Today, if a bitmap can represent $2^n$ distinct values, it is said to have n bits per pixel' or to be n deep'; each pixel is represented by n bits.

Colour displays further stretched the concepts. On a colour display a pixel consists of 3 components or 'sub-pixels', one for each of the red, green and blue primary components of the colour. A full description of the data in a colour bitmap (or a colour pixel) must include the number of bits used to represent each of the components.

For example: a common colour bitmap on a modern computer is 24 bits deep, having 8 bits for each of red, green and blue; thus it can represent $2^{24}$ or 16, 777, 216 different colours.

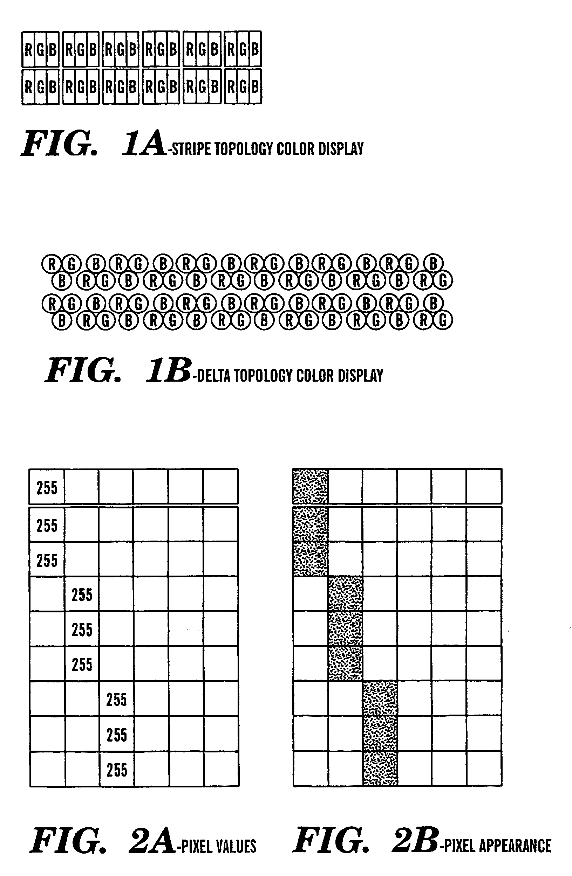

A stripe topology colour display is one in which the three sub-pixels of a pixel are arranged as contiguous vertical bars. Each sub-pixel is roughly three times as high as it is wide; thus each pixel is roughly square. Examples of the stripe topology display are the SONY Trinitron®CRT (cathode ray tube), and most newer colour LCDs (liquid crystal displays). Figure 1A illustrates a portion of a stripe topology display with pixels composed of contiguous Red, Green and Blue rectangular sub-pixels.

In contrast, a delta topology colour display is one in which the sub-pixels of each pixel are roughly circular and are arranged in an equilateral triangle. Most older commercial televisions are of the delta topology. Figure 1B illustrates a portion of a delta topology colour display with pixels composed of contiguous Red, Green and Blue circular sub-pixels. In both Figures 1A and 1B the spacing between pixels is exaggerated for clarity.

All colour displays use various weighted combinations of the sub-pixels to provide the full colour spectrum for each pixel. At normal viewing distances, the human eye does not see the closely spaced colour sub-pixels individually, but rather mixes the adjacent colours to form a blend.

When displaying an object with a required foreground intensity on a background with a given intensity the pixels of the object have to be merged with the pixels of the background. Hereinafter, the term 'foreground' refers to the colour of the object to be imaged; and 'background' refers to the colour already in place prior to imaging the object.

The term 'aliasing' (also known as the jaggies) is an undesirable effect in which an edge of a graphic object is characterised by a stair-step appearance (see Figures 2A and 2B). Aliasing occurs because of the relatively large size of the display pixel, which forces a large incremental change, in comparison with an idealised object of infinite precision. In Figures 2A and 2B, pixel values of 255 correspond to black, whereas all other pixel values are 0, corresponding to white. Throughout the drawings all pixel, sub-pixel and bitmap values are equal to 0 unless otherwise indicated.

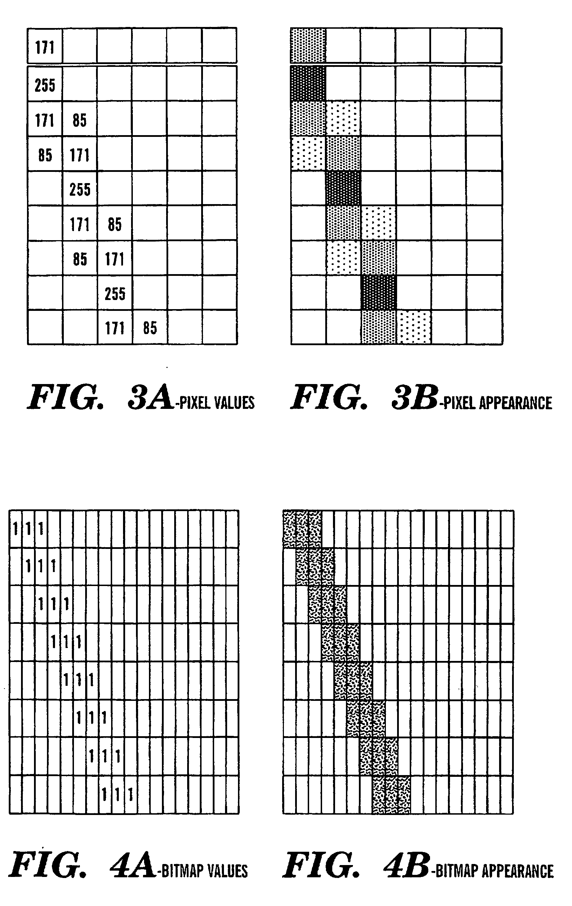

Typical anti-aliasing techniques operate at the pixel level, by varying certain pixel intensities to give the illusion of greater resolution. For example: in Gupta-Sproull line drawing, the intensity of a pixel is changed based on the perpendicular distance from the ideal line. Pixels on the line are drawn to replace at full foreground intensity, while pixels far from the line are drawn with intensity nearer that of the background. At normal viewing distances, the eye perceives this as a 'smooth' line of constant intensity. (see Figures 3A and 3B).

A practical method of generalised anti-aliasing has been derived from sampling theory. It involves computing a weighted average or 'filter' for a small neighbourhood around each pixel. A simple example: add twice the value of the target pixel to the values of the pixels above, below, left and right of the target pixel; then divide by 6. In practice, the filters suggested by sampling theory are somewhat more complex than the prior example, but fall into the same broad class of centre weighted low pass filters.

A brief introduction to signal processing, anti-aliasing, and filtering, helpful in understanding the principles of the invention, can be found in "Computer Graphics: Principles and Practice" by Foley et al., Addison Wesley Publishers (2nd edition, 1990), sections 3.17, pages 132-40 and 14.10, pages 617-45.

US 5 543 819 discloses a system for high colour resolution on an inexpensive high speed LCD display using single-bit LCD drivers by the averaging of a large number of consecutive frame time intervals to generate sub-pixel images.

EP 0 346 621 describes filtering techniques to address aliasing problems.

OBJECTS OF THE INVENTION

It is an object of the present invention to provide an anti-aliasing method and apparatus for use with a stripe topology colour display which provides sub-pixel level smoothing in a manner which enhances the apparent resolution of the display, yielding enhanced object shape and positioning, while maintaining accurate foreground and background colours when displaying an object on a background.

## SUMMARY OF THE INVENTION

The above mentioned objects are realised by a method having the specific features of claim 1. Specific features for preferred embodiments of the invention are set out in the dependent claims.

The objects of are also realised by a medium having the features according to claim 7 and by a system having the features of claim 8.

Further advantages and embodiments of the present invention will become apparent from the following description and drawings. The method can be implemented via code from a computer-readable medium in a computer system.

## BRIEF DESCRIPTION OF THE DRAWINGS

The aforementioned aspects and other features of the invention are described in detail in conjunction with the accompanying drawings in which the same reference numerals are used throughout for denoting corresponding elements and wherein:

Fig. 1A     is an illustration of a stripe topology colour display;

Fig. 1B     is an illustration of a delta topology colour display;

Fig. 2A     shows pixel values for a line, which illustrates aliasing;

Fig. 2B     shows the pixel appearance for the line, which illustrates aliasing in Figure 2A;

Fig. 3A     shows pixel values of a line drawn with pixel based antialiasing;

Fig. 3B     shows the pixel appearance of the line drawn with pixel based anti-aliasing in Figure 3A;

Fig. 4A     shows the bit values in a super-sampled bitmap of a line;

Fig. 4B     shows the appearance of the super-sampled bitmap of the line of Figure 4A;

Fig. 5     illustrates an array of average intensities calculated for a super-sampled bitmap;

Fig. 6 A to E     illustrate the calculation of sub-pixel intensities and sub-pixel values for a super-sampled bitmap;

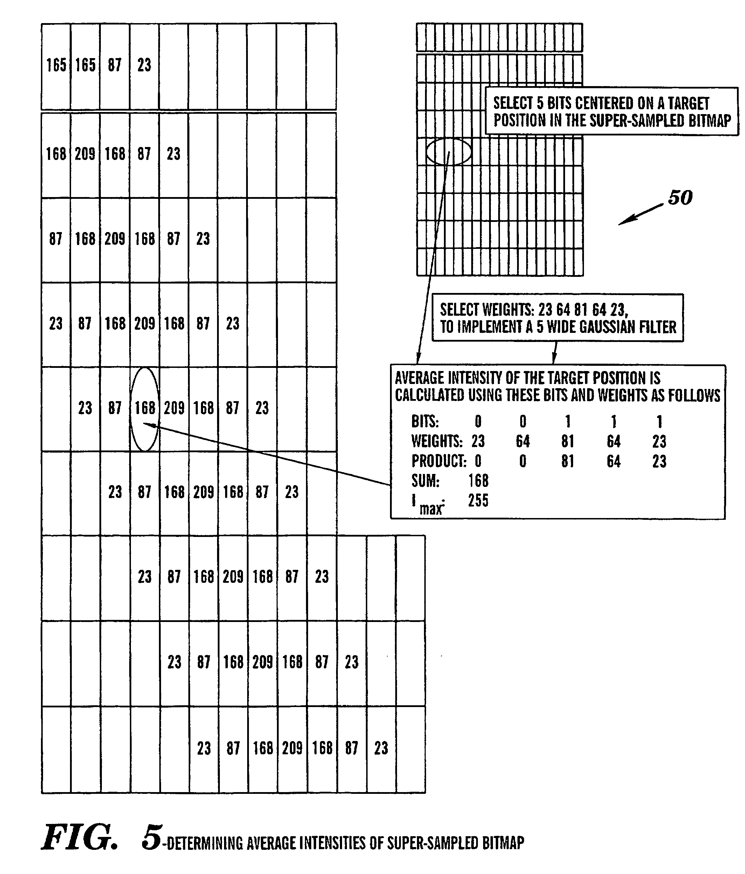

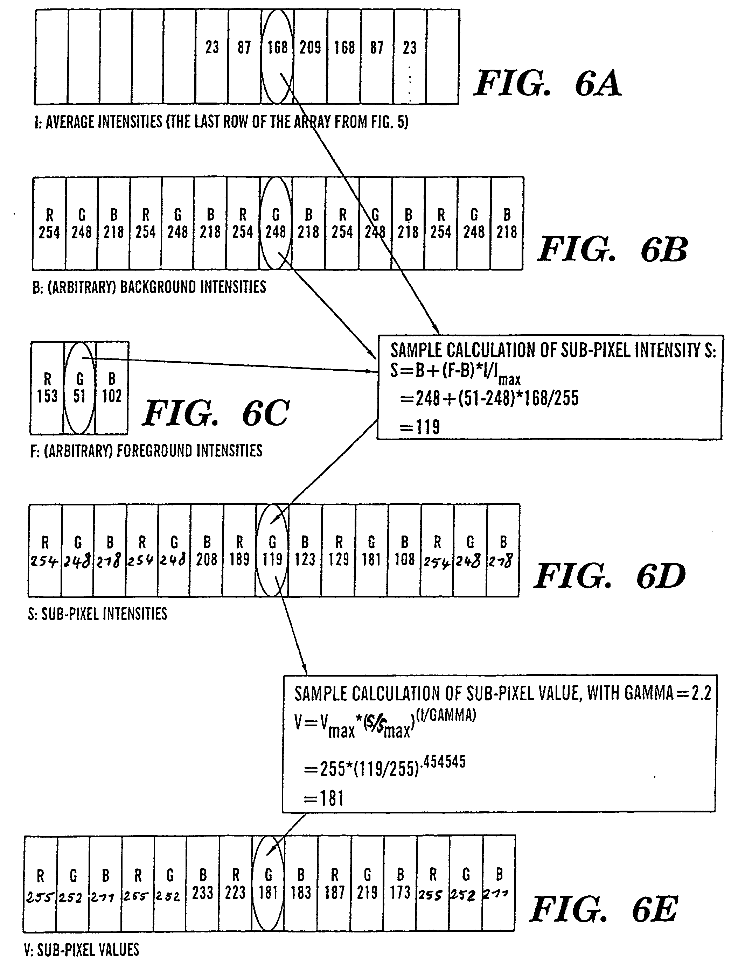

Fig. 6A     illustrates an array of average intensities from Figure 5;

Fig. 6B     illustrates an array of background intensities;

Fig. 6C     illustrates an array of foreground intensities;

Fig. 6D     illustrates an array of sub-pixel intensities;

Fig. 6E     illustrates an array of sub-pixel values;

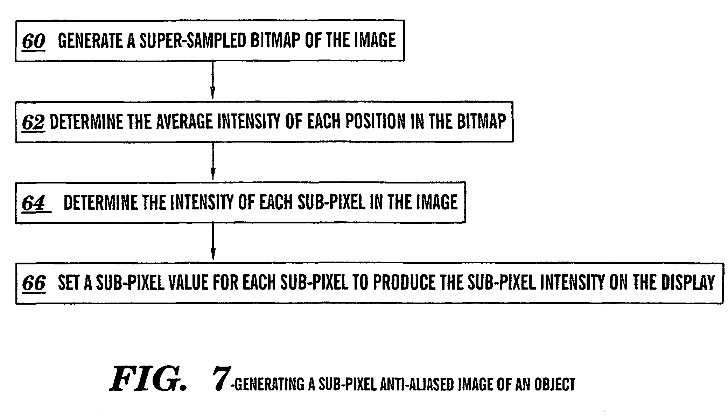

Fig. 7     is a flowchart of the method according to the invention; and

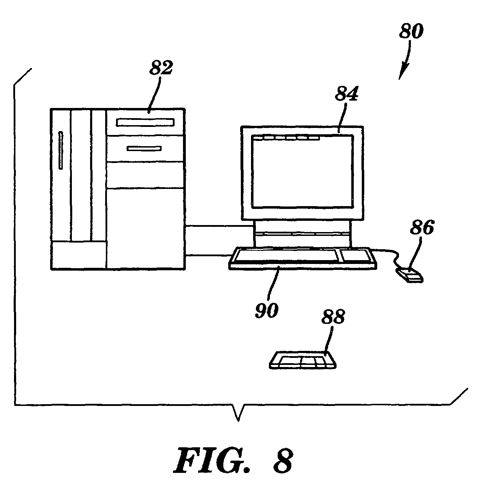

Fig. 8     illustrates a computer system for implementing the method of Figure 7.

## DETAILED DESCRIPTION OF THE INVENTION

The invention will be described below in relation to a preferred embodiment for implementing the method of the invention.

The embodiment of a computer system for implementing a method for rendering sub-pixel anti-aliased graphics on a stripe topology colour display is illustrated in Figure 8. The system 80 includes the following interconnected components: a computer 82; a keyboard 90; a mouse 86; and a (stripe topology) cathode ray tube monitor 84. Other peripherals, including various input/output components, can be added as desired. The method according to the invention can be loaded into the computer as firmware, or as software in computer memory, or it can be run from a computer-readable medium, such as a CDROM or disk 88 containing code to cause a computer system to display an image according to the claimed invention.

A liquid crystal display can replace the CRT monitor 84. The computer system 80 could be any form of computer such as a stand-alone computer, a laptop, a hand held processor, an equipment controller, part of an integrated control system, etc.

To understand the method, first, consider the special case of drawing a black object on a white background. In the case of whole pixel anti-aliasing, a dark object must start and stop on a pixel boundary. However, using sub-pixel anti-aliasing, we manipulate the sub-pixels individually. Thus, we can start or stop the dark segment at sub-pixel boundaries, effectively increasing the horizontal resolution by a factor of 3. This results in increased accuracy in displaying the shape and position of an object compared with conventional drawing or pixel based anti-aliasing (compare Figures 2b, 3b and 4b). Moreover, the present invention is able to derive similar benefits in the general case of drawing an object in any foreground colour, over any background colour.

Using sub-pixel anti-aliasing techniques for typefaces on a stripe topology colour display yields numerous advantages over conventional anti-aliasing schemes. Accurate inter-character spacing is extremely important to the readability of text. At small point sizes, inter-character spacing is greatly improved by the possibility of sub-pixel character positioning. The weight of a typeface - the ratio of the width of strokes to the height of a character - is extremely important to the appearance and readability of text. At small point sizes, the weight of a typeface is greatly improved by the possibility of fractional pixel stroke widths (e.g.: 1 and 1/3 pixels). Finally, the reduction in the jaggies of italic characters is further improved by sub-pixel control.

One must use some care in setting individual sub-pixels; otherwise some objectionable colour artefacts may appear. This so called 'colour fringe' is caused by sudden spatial changes in perceived brightness among sub-pixels. There are two basic ways to eliminate this phenomenon. The first is to place additional space between pixels of potentially different brightness - LCD manufacturers use this technique by the inclusion of an opaque mask between the pixels of their displays. The second is to mediate the maximum difference in brightness between adjacent sub-pixels - the present invention takes this approach.

The flowchart of Figure 7 illustrates a preferred method for implementing the principles of the invention. The basic steps include:

60　generating a bitmap containing bitmappixels for the object;

62　determining an average intensity for each subpixel of the image display from the bitmappixels;

64　determining a sub-pixel intensity for each sub-pixel of the image; and

66　setting a sub-pixel value for each sub-pixel to produce the sub-pixel intensity on a display.

These steps are each implemented by the computer system 80 (see Figure 8), specifically by commands resident in firmware or software which are carried out by the processing capabilities of the computer 82.

Step 60 involves generating a super-sampled bitmap for the object to be rendered. The pixels of this bitmap are called bitmappixels.

Each bitmappixel of the super-sampled bitmap is preferably represented by 1 bit. This is done so as to generate at least 1 bit for each sub-pixel of the image, thus providing the basis of sub-pixel control of the image. Generating a bitmap at normal resolution would overlay a grid so that each cell or bitmappixel corresponds to one pixel of the final image. The current method generates a super-sampled bitmap by using a grid having more than one cell per pixel of the final image.

Preferably the resolution is selected in order to provide 1 bitmappixel for each sub-pixel of the colour display. The bitmap may be made using any standard rasterisation (scan conversion) algorithm. The image is overlaid with a grid 50 as illustrated in Figure 5, each cell of the grid 50 representing a bit in the bitmap.

If a cell lies inside the image, the corresponding bit is set to 1, otherwise the bit is set to 0. A further description of this procedure can be found in Foley et al., supra, at sections 3.2, pages 72-79 and 3.6, pages 92-97. Step 62 generates average intensities from the bitmap of step 60. This is done to mediate the maximum differences in intensity between adjacent positions of the bitmap. From the 1-bit bitmap shown in Fig. 4A, an array of average intensities shown in Fig.5 is computed as set out below. A weighted average (Fig.5) is computed of the bits (Fig. 4A) in a neighbourhood of each position. The best aesthetics are obtained using a weights based on a centre weighted low pass filter, such as a gaussian (e.g. one-dimensional) or bartlett filter (see Figure 5). Other filters can be used but average intensities are preferably derived from the values of adjacent bitmappixels. If more than one bitmappixel is provided for each sub-pixel of the colour display at least one average intensity has to be calculated for the group of bitmappixels representing a sub-pixel of the display.

In the example illustrated in Figure 5, for a one-dimensional weighted average based on a 5 wide gaussian filter, the weights {23, 64, 81, 64, 23} are obtained. These weights are applied to a five wide neighbourhood centered on the target position {0, 0, 1, 1, 1}, the target position corresponds to row 4, column 4 of Fig. 4A. The horizontal neighbourhood is formed by row 4, columns 2, 3, 4, 5, and 6 having bitmap values 0, 0, 1, 1, and 1 respectively. The average intensity of the target position is: (23*0 + 64*0 + 81*1 + 64*1 + 23*1) = 168. The maximum intensity for this example is $I_{max}$ = 255 i.e. the sum of the weights 23x1 + 64x1 + 81x1 + 64x1 + 23x1, if all bits of the neighbourhood are 1. In practice the bit pattern 00111 is looked up in a table of pre-computed average values.

Steps 64 and 66 are explained in conjunction with Figures 6A-E.

Step 64 assigns the sub-pixel intensity S for each sub-pixel based on the intensity of the foreground colour F, the intensity of the background colour B, and the average intensity I from step 62. The calculation is a linear interpolation:

$$S = Bk + (Fk - Bk) * I / I_{max}$$

where: Bk means the intensity of the appropriate component (red, or green or blue) of the background colour, and $I_{max}$ is the maximum intensity of step 62. In the example of Figures 6A-E, for a given green sub-pixel, the average intensity I is 168, the background intensity B is 248, the foreground intensity is 51, and the sub-pixel intensity is calculated as 119.

The above mentioned equation is used in the assumption that the minimal intensity $I_{min}$=0.

When this is not the case the above-mentioned equation is changed to :

$$S=B+ (F-B) * (I-I_{min} /I_{max} -I_{min})$$

in order to cope with the minimum intensity not being represented by 0. This leads eventually to the same result and provides no solution deviation from the present invention.

Preferably the foreground intensity and the background intensity are determined using a table lookup from pairs of x-intercept data generated during rasterization of e.g. a character outline.

Step 66 determines the colour component value needed by the particular display hardware to obtain, on the display, the sub-pixel intensity S calculated in step 64. This calculation is based on the well-known gamma correction formulae, which relate intensity measured from a CRT with the gun voltage irradiating the phosphors.

An expression which relates a requested colour value V with the resulting display intensity S is :

$$V = V_{max} * ( S / S_{max}) (1/gamma)$$

where:

$V_{max}$ is a maximum colour value;

$S_{max}$ is a maximum sub-pixel intensity; and

gamma is the gamma of the particular display device.

For the example of Figures 6A-E, $V_{max}$ is 255, $S_{max}$ is 255, S is 119, gamma is 2.2 and V is calculated as 181. The maximum colour value $V_{max}$ depends on the hardware. For example: if a system had 24-bit colour, using 8 bits for each component, $V_{max}$ would be $2^8-1$ or 255.

The value of Max depends on the particular average used in step 62.

Gamma is determined solely by the video hardware. Most modern video equipment, including CRT and LCD displays have a gamma value in the range 2.2 to 2.4. An additional description on gamma correction can be found in Foley et al., supra, at section 13.1.1, pages 564-67.

In an other embodiment a computer readable medium is provided having code to cause a computer system to display an image on a stripe topology colour display using sub-pixel anti-aliasing, the code operating by:

- generating a 1 bit per pixel super-sampled bitmap for the image, in which there is greater than or equal to 1 bit for each sub-pixel of the image;
- determining an average intensity I for each position of the image from the bitmap;
- determining a sub-pixel intensity S for each said sub-pixel using the average intensity I, a foreground intensity F and a background intensity B; and
- setting a sub-pixel value V for each said sub-pixel to produce the sub-pixel intensity on the display.

In a preferred embodiment the code on the computer-readable medium causes the super-sampled bitmap to be generated at the normal vertical resolution and 3 times the normal horizontal resolution.

The computer-readable medium of can also provide code to ensure that the average intensity for each said sub-pixel is determined by taking a 5 sub-pixels wide centre weighted average at each bit in the super-sampled bitmap.

In another embodiment the code provided by the computer-readable medium of instructs the sub-pixel intensity S to be determined from the average intensity I, the foreground intensity F, the background intensity B, and the maximum intensity $I_{max}$ as:

$$S = B + (F- B) * I / I_{max} .$$

In another embodiment the sub-pixel value for each said sub-pixel is determined as:

$$V = V_{max} * ( S / S_{max} )^{(1/gamma)}$$

where:

$V_{max}$ is a predetermined maximum colour value;
$S_{max}$ is a maximum average intensity; and
gamma is a constant of the display hardware.

A further embodiment code is provided to instruct the foreground intensity and the background intensity to be determined using a table lookup from pairs of x-intercept data generated during rasterization of a character outline.

Another possible embodiment according to the invention is a system for displaying an image on a stripe topology colour display using sub-pixel anti-aliasing, the system comprising:

- means for generating a 1 bit per pixel super-sampled bitmap for the image, in which there is greater than or equal to 1 bit for each sub-pixel of the image;
- means for determining an average intensity I for each position of the image from the bitmap;
- means for determining a sub-pixel intensity S for each said sub-pixel using the average intensity I, a foreground intensity F and a background intensity B; and
- means for setting a sub-pixel value V for each said sub-pixel to produce the sub-pixel intensity S on the display.

In another embodiment the means are provided wherein the super-sampled bitmap is generated at the normal vertical resolution and 3 times the normal horizontal resolution.

It is also possible to provide means to determine the average intensity for each said sub-pixel by taking a 5 sub-pixels wide centre weighted average at each bit in the super-sampled bitmap.

Preferably the system comprises means determining the sub-pixel intensity S from the average intensity I, the foreground intensity F, the background intensity B, and the maximum intensity $I_{max}$ as:

$$S = B + (F- B) * I / I_{max}.$$

The system can also provide means for determining the sub-pixel value for each said sub-pixel using following equation:

$$V = V_{max} * ( S / S_{max} )^{(1 /gamma)}$$

where:

$V_{max}$ is a predetermined maximum colour value;
$S_{max}$ is a maximum sup-pixel intensity; and
gamma is a constant of the display hardware.

The system can also comprise means providing a lookup table constructed from pairs of x-intercept data generated during rasterization of a character outline.

Having described in detail preferred embodiments of the current invention, it will now be apparent to those skilled in the art that numerous modifications can be made therein without departing from the invention as defined in the appending claims.

Parts list

50.    grid
60.    step of generating a bitmap for the image;
62.    step of determining an average intensity for each position of the image from the bitmap;
64.    step of determining a sub-pixel intensity for each sub-pixel of the image; and
66.    step of setting a sub-pixel value for each sub-pixel to produce the sub-pixel intensity on a display.
80.    computer system
82.    computer
84.    cathode ray tube monitor
86.    mouse
88.    CDROM or disk
90.    Keyboard

**Claims**

1.  A method for displaying on a stripe topology colour display (84), having sub-pixels for each of the primary colour components, an image having an object with a required foreground intensity F on a background with a given background intensity B, the method comprising:

    -    generating for the object a super-sampled bitmap having bitmappixels with 1 bit per bitmappixel, in which there is for each sub-pixel of the colour display (84) at least one bitmappixel;
    -    determining for each sub-pixel of the colour display (84) at least one average intensity I of adjacent bitmappixels;
    -    determining for each said sub-pixel a sub-pixel intensity S using said average intensity I, said foreground intensity F and said background intensity B for the appropriate colour component; and
    -    setting for each said sub-pixel a sub-pixel value V to produce the sub-pixel intensity S on the colour display (84) for gamma correction.

2.  The method according to claim 1 wherein the super-sampled bitmap is generated at a vertical resolution corresponding to the pixel resolution of the display and at a horizontal resolution corresponding to three times the pixel resolution of the display.

3.  The method according to claim 1 or 2 wherein the average intensity for each said sub-pixel is determined by taking a 5 sub-pixels wide centre weighted average at a plurality of bitmappixels in the super-sampled bitmap.

4.  The method according to any one of the preceding claims wherein the sub-pixel intensity S is determined from the average intensity I, the foreground intensity F, the background intensity B, and the maximum average intensity $I_{max}$ according to the equation:

    $$S = B + (F - B) * I / I_{max}.$$

5.  The method according to any one of the preceding claims wherein the sub-pixel value V for each said sub-pixel is determined as:

    $$V = V_{max} * ( S / S_{max} )^{(1/gamma)}$$

    where:

    $V_{max}$ is a predetermined maximum colour value;
    $S_{max}$ is a maximum sub-pixel intensity; and
    gamma is a constant of the display hardware.

6.  The method according to any one of the preceding claims wherein the foreground intensity and the background intensity are determined using a table lookup from pairs of x-intercept data generated during rasterization of a character outline.

**7.** A computer-readable medium (88) containing code to cause a computer system (80) to display on a stripe topology colour display, having sub-pixels for each of the primary colour components, an image having an object with a required foreground intensity F on a background having a given background intensity B, the code operating by:

- generating for the object a super-sampled bitmap having bitmappixels with 1 bit per bitmappixel, in which there is for each sub-pixel of the colour display (84) at least one bitmappixel;
- determining for each sub-pixel of the colour display (84) at least one average intensity I of adjacent bitmappixels;
- determining for each said sub-pixel a sub-pixel intensity S using said average intensity I, said foreground intensity F and said background intensity B for the appropriate colour component; and
- setting for each said sub-pixel a sub-pixel value V to produce the sub-pixel intensity S on the colour display (84) for gamma correction.

**8.** A system for displaying on a stripe topology colour display (84), having sub-pixels for each of the primary colour components, an image having an object with a required foreground intensity F on a background having a given background intensity B, the system comprising:

- means for generating for the object a super-sampled bitmap having bitmappixels with 1 bit per bitmappixel, in which there is for each sub-pixel of the colour display (84) at least one bitmappixel;
- means for determining for each sub-pixel of the colour display (84) at least one average intensity I of adjacent bitmappixels;
- means for determining for each said sub-pixel a sub-pixel intensity S using said average intensity I, said foreground intensity F and said background intensity B for the appropriate colour component; and
- means for setting a sub-pixel value V for each said sub-pixel to produce the sub-pixel intensity S on the colour display (84) for gamma correction.

**Patentansprüche**

**1.** Verfahren zum Anzeigen eines Bildes, welches ein Objekt aufweist, welches eine geforderte Vordergrund-intensität F auf einem Hintergrund mit einer gegebenen Hintergrundintensität B aufweist, auf einer Streifen-Topologie-Farbanzeige (84), welche Subpixel für jede der Primärfarbkomponenten aufweist, wobei das Verfahren umfasst:

- Erzeugen einer überabgetasteten Bitmap für das Objekt, wobei die Bitmap Bitmappixel mit 1 Bit pro Bitmappixel aufweist, in welcher Bitmap für jedes Subpixel der Farbanzeige (84) wenigstens ein Bitmappixel vorliegt;
- Ermitteln von wenigstens einer durchschnittlichen Intensität I von benachbarten Bitmappixeln für jedes Subpixel der Farbanzeige (84);
- Ermitteln von einer Subpixel-Intensität S für jedes Subpixel unter Verwendung der durchschnittlichen Intensität I, der Vordergrund-Intensität F sowie der Hintergrund-Intensität B für die entsprechende Farbkomponente; und
- Setzen eines Subpixel-Wertes V für jedes Subpixel, um die Subpixel-Intensität S auf der Farbanzeige (84) für eine Gammakorrektur zu erzeugen.

**2.** Verfahren nach Anspruch 1, wobei die überabgetastete Bitmap mit einer der Pixelauflösung der Anzeige entsprechenden vertikalen Auflösung und einer dem dreifachen der Pixelauflösung der Anzeige entsprechenden horizontalen Auflösung erzeugt wird.

**3.** Verfahren nach Anspruch 1 oder 2, wobei die durchschnittliche Intensität für jedes Subpixel ermittelt wird, indem ein 5 Subpixel breiter mittengewichteter Durchschnitt bei einer Mehrzahl von Bitmap-Pixeln in der überabgetasteten Bitmap genommen wird.

**4.** Verfahren nach einem der vorangehenden Ansprüche, wobei die Subpixel-Intensität S von der durchschnittlichen Intensität I, der Vordergrund-Intensität F, der Hintergrund-Intensität B sowie der Maximum-Durchschnitt-Intensität $I_{max}$ gemäß der Gleichung

$$S = B + (F - B) * I / I_{max}$$

ermittelt wird.

**5.** Verfahren nach einem der vorangehenden Ansprüche, wobei der Subpixel-Wert V für jedes Subpixel als

$$V = V_{max} * (S / S_{max})^{(1/gamma)}$$

ermittelt wird,
wobei:

$V_{max}$ ein vorbestimmter Maximum-Farb-Wert ist;

$S_{max}$ eine Maximum-Subpixel-Intensität ist; und

gamma eine Konstante der Anzeige-Hardware ist.

6. Verfahren nach einem der vorangehenden Ansprüche, wobei die Vordergrund-Intensität und die Hintergrund-Intensität ermittelt werden unter Verwendung eines Nachschlagens in einer Tabelle von während einer Rasterung einer Zeichen-Kontur erzeugten Paaren von x-Achsenabschnitt-Daten.

7. Computerlesbares Medium (88), welches einen Code enthält, welcher bewirkt, dass ein Computersystem (80) ein Bild anzeigt, welches ein Objekt aufweist, welches eine geforderte Vordergrundintensität F auf einem Hintergrund mit einer gegebenen Hintergrundintensität B aufweist, auf einer Streifen-Topologie-Farbanzeige, welche Subpixel für jede der Primärfarbkomponenten aufweist, wobei der Code folgendermaßen arbeitet:

  - Erzeugen einer überabgetasteten Bitmap für das Objekt, wobei die Bitmap Bitmappixel mit 1 Bit pro Bitmappixel aufweist, in welcher Bitmap für jedes Subpixel der Farbanzeige (84) wenigstens ein Bitmappixel vorliegt;

  - Ermitteln von wenigstens einer durchschnittlichen Intensität I von benachbarten Bitmappixeln für jedes Subpixel der Farbanzeige (84);

  - Ermitteln von einer Subpixel-Intensität S für jedes Subpixel unter Verwendung der durchschnittlichen Intensität I, der Vordergrund-Intensität F sowie der Hintergrund-Intensität B für die entsprechende Farbkomponente; und

  - Setzen eines Subpixel-Wertes V für jedes Subpixel, um die Subpixel-Intensität S auf der Farbanzeige (84) für eine Gammakorrektur zu erzeugen.

8. System zur Anzeige eines Bildes, welches ein Objekt aufweist, welches eine geforderte Vordergrundintensität F auf einem Hintergrund mit einer gegebenen Hintergrundintensität B aufweist, auf einer Streifen-Topologie-Farbanzeige (84), welche Subpixel für jede der Primärfarbkomponenten aufweist, wobei das System umfasst:

  - Mittel zum Erzeugen einer überabgetasteten Bitmap für das Objekt, wobei die Bitmap Bitmappixel mit 1 Bit pro Bitmappixel aufweist, in welcher Bitmap für jedes Subpixel der Farbanzeige (84) wenigstens ein Bitmappixel vorliegt;

  - Mittel zum Ermitteln von wenigstens einer durchschnittlichen Intensität I von benachbarten Bitmappixeln für jedes Subpixel der Farbanzeige (84) :

  - Mittel zum Ermitteln von einer Subpixel-Intensität S für jedes Subpixel unter Verwendung der durchschnittlichen Intensität I, der Vordergrund-Intensität F sowie der Hintergrund-Intensität B für die entsprechende Farbkompohente; und

  - Mittel zum Setzen eines Subpixel-Wertes V für jedes Subpixel, um die Subpixel-Intensität S auf der Farbanzeige (84) für eine Gammakorrektur zu erzeugen.

## Revendications

1. Procédé d'affichage, sur un écran d'affichage couleur à topologie en bandes (84) comprenant des sous-pixels pour chacune des composantes de couleur primaires, d'une image contenant un objet présentant une intensité d'avant-plan F requise sur un arrière-plan présentant une intensité d'arrière-plan B donnée, le procédé comprenant:

  - la génération pour l'objet d'une image en mode point super-échantillonnée comprenant des pixels binaires contenant un bit par pixel binaire, dans laquelle au moins un pixel binaire est prévu pour chaque sous-pixel de l'écran d'affichage couleur (84);
  - la détermination pour chaque sous-pixel de l'écran d'affichage couleur (84) d'au moins une intensité moyenne I de pixels binaires voisins;
  - la détermination pour chaque sous-pixel d'une intensité de sous-pixel S en utilisant ladite intensité moyenne I, ladite intensité d'avant-plan F et ladite intensité d'arrière-plan B pour la composante de couleur appropriée; et
  - la fixation pour chacun desdits sous-pixels d'une valeur de sous-pixel V pour produire l'intensité de sous-pixel S sur l'écran d'affichage couleur (84) pour une correction de gamma.

2. Procédé selon la revendication 1, dans lequel l'image en mode point super-échantillonnée est générée à une résolution verticale correspondant à la résolution de pixel de l'écran d'affichage et à une résolution horizontale correspondant à trois fois la résolution de pixel de l'écran d'affichage.

3. Procédé selon la revendication 1 ou 2, dans lequel l'intensité moyenne pour chaque sous-pixel est déterminée en calculant une moyenne pondérée centrale de 5 sous-pixels de large au niveau d'une pluralité de pixels binaires dans l'image en mode point super-échantillonnée.

4. Procédé selon l'une quelconque des revendications précédentes, dans lequel l'intensité de sous-pixel S est déterminée à partir de l'intensité moyenne I, de l'intensité d'avant-plan F, de l'intensité d'arrière-plan B et de l'intensité moyenne maximum $I_{max}$ conformément à l'équation:

$$S = B + (F - B) * I / I_{max}$$

5. Procédé selon l'une quelconque des revendications précédentes, dans lequel la valeur de sous-pixel V pour chacun desdits sous-pixels est déterminée comme suit:

$$V = V_{max} * (S / S_{max})^{(1/gamma)}$$

Où :

$V_{max}$ est une valeur de couleur maximum prédéterminée;

$S_{max}$ est une intensité de sous-pixel maximum; et

gamma est une constante du matériel d'affichage.

6. Procédé selon l'une quelconque des revendications précédentes, dans lequel l'intensité d'avant-plan et l'intensité d'arrière-plan sont déterminées en utilisant une table à consulter à partir de paires de données d'interception x générées pendant le balayage tramé d'un contour de caractère.

7. Support lisible par un ordinateur (88) contenant un code pour amener un système informatique (80) à afficher, sur un écran d'affichage à topologie en bandes comprenant des sous-pixels pour chacune des composantes de couleur primaires, une image contenant un objet présentant une intensité d'avant-plan F requise sur un arrière-plan présentant une intensité d'arrière-plan B donnée, le code servant à:

- générer pour l'objet une image en mode point super-échantillonnée comprenant des pixels binaires contenant un bit par pixel binaire, dans laquelle au moins un pixel binaire est prévu pour chaque sous-pixel de l'écran d'affichage couleur (84);
- déterminer pour chaque sous-pixel de l'écran d'affichage couleur (84) au moins une intensité moyenne I de pixels binaires voisins;
- déterminer pour chaque sous-pixel une intensité de sous-pixel S en utilisant ladite intensité moyenne I, ladite intensité d'avant-plan F et ladite intensité d'arrière-plan B pour la composante de couleur appropriée; et
- fixer pour chacun desdits sous-pixels une valeur de sous-pixel V pour produire l'intensité de sous-pixel S sur l'écran d'affichage couleur (84) pour une correction de gamma.

8. Système d'affichage, sur un écran d'affichage couleur à topologie en bandes (84) comprenant des sous-pixels pour chacune des composantes de couleur primaires, une image contenant un objet présentant une intensité d'avant-plan F requise sur un arrière-plan présentant une intensité d'arrière-plan B donnée, le système comprenant:

- des moyens pour générer pour l'objet une image en mode point super-échantillonnée comprenant des pixels binaires contenant un bit par pixel binaire, dans laquelle au moins un pixel binaire est prévu pour chaque sous-pixel de l'écran d'affichage couleur (84);
- des moyens pour déterminer pour chaque sous-pixel de l'écran d'affichage couleur (84) au moins une intensité moyenne I de pixels binaires voisins;
- des moyens pour déterminer pour chaque sous-pixel une intensité de sous-pixel S en utilisant ladite intensité moyenne I, ladite intensité d'avant-plan F et ladite intensité d'arrière-plan B pour la composante de couleur appropriée; et
- des moyens pour fixer pour chacun desdits sous-pixels une valeur de sous-pixel V pour produire l'intensité de sous-pixel S sur l'écran d'affichage couleur (84) pour une correction de gamma.

**FIG. 1A** -STRIPE TOPOLOGY COLOR DISPLAY

**FIG. 1B** -DELTA TOPOLOGY COLOR DISPLAY

**FIG. 2A** -PIXEL VALUES    **FIG. 2B** -PIXEL APPEARANCE

| 171 | | | | | |
|---|---|---|---|---|---|
| 255 | | | | | |
| 171 | 85 | | | | |
| 85 | 171 | | | | |
| | 255 | | | | |
| | 171 | 85 | | | |
| | | 85 | 171 | | |
| | | 255 | | | |
| | | 171 | 85 | | |

**FIG. 3A** -PIXEL VALUES

**FIG. 3B** -PIXEL APPEARANCE

**FIG. 4A** -BITMAP VALUES

**FIG. 4B** -BITMAP APPEARANCE

| 165 | 165 | 87 | 23 | | | | | | |
| 168 | 209 | 168 | 87 | 23 | | | | | |
| 87 | 168 | 209 | 168 | 87 | 23 | | | | |
| 23 | 87 | 168 | 209 | 168 | 87 | 23 | | | |
| | 23 | 87 | 168 | 209 | 168 | 87 | 23 | | |
| | | 23 | 87 | 168 | 209 | 168 | 87 | 23 | |
| | | | 23 | 87 | 168 | 209 | 168 | 87 | 23 |
| | | | | 23 | 87 | 168 | 209 | 168 | 87 | 23 |
| | | | | | 23 | 87 | 168 | 209 | 168 | 87 | 23 |

SELECT 5 BITS CENTERED ON A TARGET POSITION IN THE SUPER-SAMPLED BITMAP

50

SELECT WEIGHTS: 23 64 81 64 23, TO IMPLEMENT A 5 WIDE GAUSSIAN FILTER

AVERAGE INTENSITY OF THE TARGET POSITION IS CALCULATED USING THESE BITS AND WEIGHTS AS FOLLOWS

| | | | | | |
|---|---|---|---|---|---|
| BITS: | 0 | 0 | 1 | 1 | 1 |
| WEIGHTS: | 23 | 64 | 81 | 64 | 23 |
| PRODUCT: | 0 | 0 | 81 | 64 | 23 |
| SUM: | 168 | | | | |
| $I_{max}$: | 255 | | | | |

*FIG. 5* -DETERMINING AVERAGE INTENSITIES OF SUPER-SAMPLED BITMAP

| | | | | | 23 | 87 | 168 | 209 | 168 | 87 | 23 | ⋮ |
|---|---|---|---|---|---|---|---|---|---|---|---|---|

*FIG. 6A*

I: AVERAGE INTENSITIES (THE LAST ROW OF THE ARRAY FROM FIG. 5)

| R | G | B | R | G | B | R | G | B | R | G | B | R | G | B |
|---|---|---|---|---|---|---|---|---|---|---|---|---|---|---|
| 254 | 248 | 218 | 254 | 248 | 218 | 254 | 248 | 218 | 254 | 248 | 218 | 254 | 248 | 218 |

*FIG. 6B*

B: (ARBITRARY) BACKGROUND INTENSITIES

| R | G | B |
|---|---|---|
| 153 | 51 | 102 |

*FIG. 6C*

F: (ARBITRARY) FOREGROUND INTENSITIES

SAMPLE CALCULATION OF SUB-PIXEL INTENSITY S:

$S = B + (F-B) * I/I_{max}$

$= 248 + (51-248) * 168/255$

$= 119$

| R | G | B | R | G | B | R | G | B | R | G | B | R | G | B |
|---|---|---|---|---|---|---|---|---|---|---|---|---|---|---|
| 254 | 248 | 218 | 254 | 248 | 208 | 189 | 119 | 123 | 129 | 181 | 108 | 254 | 248 | 218 |

*FIG. 6D*

S: SUB-PIXEL INTENSITIES

SAMPLE CALCULATION OF SUB-PIXEL VALUE, WITH GAMMA = 2.2

$V = V_{max} * (S/S_{max})^{(I/GAMMA)}$

$= 255 * (119/255)^{.454545}$

$= 181$

| R | G | B | R | G | B | R | G | B | R | G | B | R | G | B |
|---|---|---|---|---|---|---|---|---|---|---|---|---|---|---|
| 255 | 252 | 211 | 255 | 252 | 233 | 223 | 181 | 183 | 187 | 219 | 173 | 255 | 252 | 211 |

*FIG. 6E*

V: SUB-PIXEL VALUES

**60** GENERATE A SUPER-SAMPLED BITMAP OF THE IMAGE

**62** DETERMINE THE AVERAGE INTENSITY OF EACH POSITION IN THE BITMAP

**64** DETERMINE THE INTENSITY OF EACH SUB-PIXEL IN THE IMAGE

**66** SET A SUB-PIXEL VALUE FOR EACH SUB-PIXEL TO PRODUCE THE SUB-PIXEL INTENSITY ON THE DISPLAY

*FIG.* *7* -GENERATING A SUB-PIXEL ANTI-ALIASED IMAGE OF AN OBJECT

**FIG. 8**